# EUROPEAN PATENT APPLICATION

(11) **EP 4 239 389 A1**
(43) Date of publication of application: **06.09.2023**
(21) Application number: 22160107.3
(22) Date of filing: 03.03.2022
(51) Int. Cl.: G02B 21/00, G02B 27/58, G02B 27/64

(54) **SCANNING LIGHT MICROSCOPY METHOD, SCANNING LIGHT MICROSCOPE AND COMPUTER PROGRAM**

(71) Applicant: Abberior Instruments GmbH, 37077 Göttingen (DE)
(72) Inventor: HARKE, Benjamin, 37083 Göttingen (DE); SCHMIDT, Roman, 37077 Göttingen (DE)

(57) **Abstract**

The invention relates to a scanning light microscopy method comprising illuminating a sample (2) with illumination light, scanning a focused light distribution of the illumination light over or through the sample (2) by means of a scanner (4) comprising adjustable control parameters, and detecting light emitted by light-emitting entities in the sample (2) in response to the illumination light to obtain an image of the sample (2) or to obtain a localization map (22) of single light-emitting entities in the sample (2), wherein the method is performed by a scanning light microscope (1) which is operable in at least two different operation modes, and wherein the method comprises adjusting the control parameters of the scanner (4) dependent on the operation mode, in which the scanning light microscope (1) is operated. The invention further relates to a scanning light microscope (1) and a computer program for performing the method.

## Description

### Technical area of the invention

The invention relates to a scanning light microscopy method for obtaining an image of a sample or a localization map of single light-emitting entities in the sample, a scanning light microscope for performing the scanning light microscopy method, and a computer program causing the scanning light microscope to perform the light microscopy method.

### Prior art

In scanning light microscopy, illumination light is focused into the sample, and the focus is scanned over or through the sample to collect detection light from different positions in the sample.

For instance, in confocal laser scanning microscopy (CLSM), an excitation laser beam is focused into the sample by an objective lens, and the focus is scanned over the sample while collecting fluorescence light from fluorophores in the sample by means of a point detector to reconstruct a fluorescence image of the sample. By placing a pinhole in front of the point detector, optical sectioning, as well as a resolution which is at least slightly below the diffraction limit, can be achieved. In addition, CLSM is especially advantageous for light-sensitive samples, since the overall exposure of the sample to the illumination light is reduced compared to wide field fluorescence microscopy.

Certain superresolution microscopy techniques, such as STED and RESOLFT microscopy (reviewed in Sahl SJ, Hell SW. High-Resolution 3D Light Microscopy with STED and RESOLFT. 2019 Aug 14. In: Bille JF, editor. High Resolution Imaging in Microscopy and Ophthalmology: New Frontiers in Biomedical Optics [Internet]. Cham (CH): Springer; 2019. Chapter 1. PMID: 32091851) are also based on confocal laser scanning microscopy. Here, a hollow (typically donut-shaped or bottle-beam-shaped) focus of an additional depletion or de-activation laser beam is superimposed with the regular focus of the excitation beam to suppress fluorescence around the central minimum of the hollow depletion/deactivation light distribution, and the combined beams are scanned over the sample.

In confocal scanning microscopy and STED/RESOLFT microscopy, deflection of the laser beam in the focal plane perpendicular to the optical axis of illumination (x/y-scanning) is typically achieved by rotatable mirrors coupled to galvanometric motors, forming a so-called galvanometric scanner, while displacement in the axial direction perpendicular to the focal plane (z scanning) may, e.g., be mediated by a piezoelectric actuator moving the sample mount relative to the objective lens. Alternatively, displacement in the focal plane may also be mediated by moving the sample stage (e.g., via a piezoelectric actuator) while keeping the laser beam stationary.

MINFLUX microscopy is a scanning light microscopy technique for nanometer localization of single light-emitting entities in a sample, wherein a hollow (typically donut-shaped or bottle-beam-shaped) focus is moved (stepwise or continuously) in a pattern in the vicinity of an expected position of a single light-emitting entity (particularly in a polygon pattern centered around the current position estimate), emission light intensities or photon counts are measured for each position, and a new position estimate is determined based on the measured light intensities/photon counts and the corresponding positions. This process may be repeated iteratively to achieve a localization precision in the low nm range. An example of an implementation of MINFLUX microscopy is described in Balzarotti F, Eilers Y, Gwosch KC, Gynnå, A, Westphal V, Stefani F, Elf J, Hell SW "Nanometer resolution imaging and tracking of fluorescent molecules with minimal photon fluxes", Science 355 (6325), 606-611 (2016).

Using adapted scanning patterns, MINFLUX has also been applied to track the spatial trajectory of single light-emitting entities over time (MINFLUX tracking). For example, this technique is described in Schmidt, R., Weihs, T., Wurm, C.A. et al. MINFLUX nanometer-scale 3D imaging and microsecond-range tracking on a common fluorescence microscope. Nat Commun 12, 1478 (2021). https://doi.org/10.1038/s41467-021-21652-z.

For fine positioning of the hollow focus in MINFLUX microscopy and MINFLUX tracking, electro-optic deflectors (EODs) are typically used due to their fast response times. EODs comprise a material which changes its refractive index upon application of an electric field, and thereby deflects an incoming light beam by a variable angle dependent on the applied electric field.

Coarse positioning of the excitation laser beam in a MINFLUX microscope may be achieved by a galvanometric scanner which is typically applied in combination with EODs.

According to a variant of the MINFLUX method described, e.g., in DE 10 2017 104 736 A1 and EP 3 372 989 A1, the sample is scanned in a pattern around an estimated position of a single light-emitting entity with a superposition of a regular excitation focus and a donut-shaped STED light distribution. A new position estimate is determined from the light intensities or photon counts measured at the scanning positions. The procedure is analogous to the MINFLUX method. However, the detected light intensities or photon counts increase with decreasing distance of the central minimum of the STED light distribution from the actual emitter position.

In a related method, which is described in US 2017/0082844 A1, an excitation light distribution with a local minimum and flanking maxima is scanned over a small field extending to 75 % or less of the maximum-to-maximum distance of the intensity maxima, e.g., in a raster, serpentine or spiral pattern, and light intensities or photon counts are measured for each scanning position. Scanning may be mediated by a combination of different scanner types, e.g., a galvanometer scanner combined with electro-optic deflectors.

Another single-particle localization method termed MINSTED has been described in Weber, M., Leutenegger, M., Stoldt, S. et al. MINSTED fluorescence localization and nanoscopy. Nat. Photonics 15, 361-366 (2021). https://doi.org/10.1038. In MINSTED, a donut-shaped STED beam is superimposed with a regularly focused excitation beam and the two beams are jointly scanned over a small field of view in a circle by electro-optic deflectors (EODs). Photons from single fluorophores in the vicinity of the scan field pass through a galvanometric scanner to an avalanche photodiode, wherein the galvanometric scanner maintains a confocal arrangement of the center of the circle scanned by the EODs. Upon detection of a photon, the center of the scanning circle is shifted towards the point of detection, the radius of the circle is decreased, and the effective point spread function is narrowed. This process is continued until the center of the scanning circle converges to the fluorophore position.

Galvanometric scanners may be operated in non-resonant mode or resonant mode. In resonant mode, the galvanometer coils receive a periodic voltage signal matching the mechanical resonance frequency of the moving element of the galvanometer with the attached mirror. Although very high scanning speeds can be achieved with resonant scanners, they are not flexible enough for many applications, especially in light microscopy.

The mirror position of non-resonant galvanometric scanners is normally controlled by a closed electronic feedback loop (DE 197 02 752 C2, DE 10 2005 047 200 B4, DE 10 2018 109 055 A1). For instance, the current mirror position may be measured by a positional sensor, e.g., comprising LEDs and silicon photodiodes. Using the signal of the positional sensor as an input, a corrective voltage signal is then determined by an electronic circuit, implementing, e.g., proportional, integral and/or derivative control terms, and the mirror position is corrected by the corrective voltage signal.

The parameters of this feedback control influence the behavior of the scanner and may thus be adapted depending on the desired application (WO 02/25640 A2).

In addition, notch filters corresponding to the resonance frequency of the galvanometer scanner, are often applied to the control signal in non-resonant mode to prevent undesired resonances which may result in mechanical damage.

In light microscopy applications, especially in the field of life sciences, there is an increasing need to observe different structures of the same sample in a single experiment. These different structures sometimes have different sizes. For example, it may be desirable to image a field of view showing biological tissues comprising an arrangement of cells, as well as obtaining more detailed images of single cells, organelles, and even protein complexes (the latter, e.g., by MINFLUX microscopy). In addition, certain structures may be visualized only with special imaging techniques (e.g., fluorescent labels, auto-fluorescent molecules, or objects which can be imaged by phase contrast or differential interference contrast (DIC) microscopy).

Therefore, there is a need for multimodal microscopes which combine different imaging / localization principles, such that images and/or localization maps showing different structures can be obtained from a single sample in a single experiment.

When different scanning light microscopy modes are combined in a microscope comprising a single scanner, the properties of the scanner are usually not ideally suited for each of the different modes, resulting in compromises in imaging/localization quality. Although it is possible to solve this problem by providing separate scanning units for each microcopy mode, this increases the costs and space requirements of the microscope.

### Objective problem

Therefore, the problem underlying the present invention is to provide a scanning light microscopy method and a scanning light microscope which can obtain high quality images or localization maps of the same sample in different operational modes in a single experiment.

### Solution

This objective is attained by the subject matter of the independent claims 1 (light microscopy method), 14 (light microscope) and 15 (computer program). Embodiments of the invention are specified in sub claims 2 to 13 as well as in the following description.

### Description of the invention

A first aspect of the disclosure relates to a scanning light microscopy method comprising illuminating a sample with illumination light, scanning a focused light distribution of the illumination light over or through the sample by means of a scanner comprising adjustable control parameters, and detecting light emitted by light-emitting entities in the sample in response to the illumination light to obtain an image of the sample or to obtain a localization map of single light-emitting entities in the sample, wherein the method is performed by a scanning light microscope which is operable in at least two different operation modes. The method further comprises adjusting the control parameters of the scanner dependent on the operation mode in which the scanning light microscope is operated.

Applying different control parameters in the different operation modes allows the user of the microscope to obtain high quality images or localization maps of the same sample in the same experiment in different operation modes using a single scanner, which minimizes costs and space requirements.

The term 'scanning light microscopy method' as used herein designates any microscopy method, in which a focused light distribution is moved relative to the sample (particularly by deflecting an illuminating light beam, moving an objective lens, moving the sample stage or a combination thereof). The light distribution may be moved relative to the sample in various patterns, e.g., a grid-like or raster pattern comprising regularly spaced locations, a line pattern, a spiral pattern, or a hexagon pattern. Patterns having irregularly spaced positions or even a random distribution of positions are also possible. The pattern may be a 2D or 3D pattern. For example, 3D scanning may be achieved by a sequence of 2D scans in a focal plane perpendicular to an optical axis along which the illumination light beam propagates, wherein a working distance between the objective lens and the sample is adjusted, e.g., by moving the sample stage parallel to the optical axis, after each 2D scan.

The pattern may be pre-determined in advance to a scan of the sample. Alternatively, an adaptive scan may be performed in which at least some of the scanning positions are determined during the scan. The scan field or pattern may have any size ranging from a few nanometers to several centimeters. Scanning may be performed by a continuous or stepwise movement of the focus relative to the sample.

In particular, the illumination light is excitation light configured to excite the light-emitting entities in the sample, such that they emit light, e.g., by luminescence (particularly fluorescence or phosphorescence). Alternatively, e.g., the illumination light may be reflected or scattered by the light-emitting entities.

The term 'light-emitting entities', as used herein, describes molecules, particles or molecular complexes emitting light in response to the illumination light. For instance, the emitted light may be generated by reflection or scattering of the illumination light, or, in case the illumination light is excitation light adapted to excite the light-emitting entities, the emitted light may be luminescence light, particularly fluorescence light or phosphorescence light. The light-emitting entities may be single molecules, complexes or aggregates of molecules or particles. The light-emitting entity may itself emit light or contain one or several molecules emitting light in a complex, aggregate or particle. For example, in fluorescence microscopy, the light emitting entities may be fluorophores (small molecules or fluorescent macromolecules such as green fluorescent protein), single molecules labeled with one or several fluorophores (e.g., proteins attached to one or several fluorophores by a chemical bond between amino acid sidechains and fluorophores or proteins bound to an antibody or similar moiety, wherein the antibody is labeled with a fluorophore). An example of a light reflecting particle is a gold nanoparticle. Fluorescent particles may be, e.g., quantum beads.

A scanning light microscope is a microscope which is configured to perform a scanning light microscopy method, e.g., a confocal laser scanning microscope, a STED (stimulated emission depletion) microscope, a RESOLFT (reversible saturable optical linear fluorescence transitions) microscope or a MINFLUX or MINSTED microscope. Of course, since the scanning light microscope has different operational modes, it may also be a combined confocal, STED/RESOLFT and/or MINFLUX or MINSTED microscope.

In the context of the present specification, the term MINFLUX microscopy (sometimes called MINFLUX nanoscopy) designates a scanning light microscopy technique for localization of single light-emitting entities in a sample, wherein the sample is illuminated by a light distribution comprising a local minimum at positions forming a pattern in the vicinity of an expected position of a single light-emitting entity, emission light intensities or photon counts are measured for each position, and a new position estimate is determined based on the measured light intensities/photon counts and the corresponding positions. MINFLUX tracking is a method for obtaining a spatial trajectory of single light-emitting entities by means of illuminating the sample with a light distribution comprising a local minimum at positions forming a pattern in the vicinity of an expected position of a single light-emitting entity measuring emission light intensities or photon counts for each position, and deriving the spatial trajectory based on the measured light intensities or photon counts. In particular, the light distribution with the local minimum is an excitation light distribution. Alternatively, e.g., the light distribution may be a depletion (e.g., STED) light distribution with a local minimum, which is particularly superimposed with an excitation light distribution with a local maximum. The above-mentioned pattern of illumination positions may be scanned stepwise or continuously. In case of continuous scanning, an allocation of the detected light intensities or photon counts to the illumination positions may be achieved by adjusting a detector dwell time, over which light intensities or photon counts are accumulated during the scan, similar to the adjustment of pixel sizes via the detector dwell time during line-scanning in confocal microscopy. A microscope configured for MINFLUX microscopy and/or MINFLUX tracking is designated 'MINFLUX microscope' (sometimes called MINFLUX nanoscope).

In the context of the present specification, the term MINSTED microscopy describes a scanning light microscopy technique for localization of single light-emitting entities in a sample, wherein the sample is scanned by an excitation light distribution comprising a local maximum superimposed with a depletion light (e.g., STED light) distribution comprising a local minimum in a circle, wherein upon detection of a photon from a light-emitting entity, the center of the circle is shifted towards the location of photon detection while reducing its radius, and an effective point spread function of detection is narrowed, until the position of the center converges to the position of a single light-emitting entity. In particular, light from the light-emitting entities is detected confocally to the center of the circle. A microscope configured for MINSTED microscopy is designated 'MINSTED microscope'.

The term 'focused light distribution' as used herein describes a focus of the illumination light on or in the sample, wherein the focus may comprise any shape. A so-called 'regular focus' or 'Gaussian focus' may be generated by passing a collimated light beam through a spherical lens, which displays Gaussian intensity distribution. Such a regular focus is commonly applied in confocal laser scanning microscopy. Alternatively, the focused light distribution may comprise a local intensity minimum (particularly a point of zero or close to zero light intensity). The local minimum may be flanked by at least one intensity maximum. Such light distributions are known, e.g., from STED and RESOLFT microscopy, where they are usually called 'donut-shaped' or 'bottle-beam-shaped'. A donut-shaped light distribution (sometimes called '2D donut') has a single central intensity minimum (positioned at the geometric focus) flanked by maxima in the focal plane. Such distributions may be generated by phase modulation of a light beam using a vortex-shaped phase pattern imprinted on a phase plate or displayed on a spatial light modulator. A bottle-beam-shaped light distribution has a single intensity minimum flanked by maxima in all three dimensions in space and is sometimes designated '3D donut'). A bottle beam can be obtained by phase modulation of a light beam with a top hat-formed phase pattern. The focus may also be line-shaped, as known, e.g., from light sheet microscopy.

The scanner may be a 'beam scanner' configured to deflect a light beam to scan the light beam over or through the sample. For instance, the beam scanner may be galvanometric scanner, an electro-optic deflector or an acousto-optic deflector. Alternatively, the scanner may be a so-called 'stage scanner' configured to move a sample stage holding the sample relative to a stationary light beam, e.g., by a mechanical actuator such as a piezoelectric actuator.

The term 'control parameters' as used throughout this specification describes parameters influencing an electric signal controlling the movement and/or beam deflection of the scanner. In particular, the control parameters are stored in a memory comprised in or connected to a control device controlling the scanner. The control parameters are adjustable by a user of the light microscope, particularly during an experiment or between experiments, more particularly via a user interface, such as a graphical user interface on a display. Furthermore, the control parameters may be automatically adjusted according to user specifications. E.g., the user may initiate an automatic sequence of microscopic measurements in the first and second operation mode and optionally further operation modes, and different sets of control parameters may be automatically selected based on a pre-determined allocation to the operation modes. For example, the control parameters may be adjusted by interacting with a software or firmware associated with the control device.

In the context of the present specification, the term 'image' describes a two-dimensional or three-dimensional representation of at least a part of the sample obtained by microscopic imaging. The image may comprise a two- or three-dimensional arrangement of pixels, wherein each pixel is characterized by a pixel intensity, e.g., a grey value or a color value. For example, in scanning fluorescence microscopy, the pixel intensities are typically obtained by accumulating the detected light during a pixel dwell time for each pixel while scanning the focus over the sample, and assigning an intensity to the accumulated signal, e.g., based on a lookup table. In particular, a single image or a series of images, e.g., a time series or an axial stack of images, of the sample may be obtained.

A 'localization map' in the meaning used herein is a two-dimensional or three-dimensional representation of the estimated positions of single light-emitting entities in the sample. Such localization maps can be obtained, e.g., by MINFLUX microscopy, MINSTED microscopy, PALM (photoactivated localization microscopy) or STORM (stochastic optical reconstruction microscopy).

In PALM/STORM microscopy, the sample is labeled with photo-switchable or blinking fluorophores under conditions ensuring that emission light signals from single emitters at a given time point have a distance from each other, such that they can be discerned in a microscopic image. A localization map of the emitters can then be reconstructed from a time series of images.

The light microscope is operable in at least two different operation modes.

In certain embodiments, in the different operation modes, different components of the light microscope are used, or the components of the light microscope interact or are arranged with respect to each other in a different manner. For instance, different objectives or different excitation or emission filters, different light sources, particularly lasers (e.g., STED lasers, excitation lasers, or activation lasers), different detectors (e.g., CCD (charge-coupled device) or CMOS (complementary metal-oxide semiconductor) cameras, point detectors, such as APDs (avalanche photodiodes), photomultipliers and hybrid detectors, array detectors), different light paths, different light modulators (such as phase plates, spatial light modulators, half wave plates, quarter wave plates, digital micromirror devices or deformable mirrors), different pinholes or no pinholes, or different additional scanning devices might be used in the different operation modes.

Although a single scanner having different control parameter sets is always present in the light microscope and used in the light microscopy method described herein, this scanner may also be used in an operation mode, where the light beam is kept stationary (or nearly stationary considering positional jitter) with respect to the sample. Furthermore, other scanning devices and deflectors may be used in combination with said scanner, wherein the scanner may remain inactive while the additional scanning device deflects the beam, or wherein several scanners move the illumination light beam relative to the sample in concert.

The use of different components according to the above-described embodiment does not require that completely separate sets of components are used for the different operation modes. Of course, some components may be used in several or all of the different operation modes, as long as at least one of the components used in one of the operation modes differs from the component used in another operation mode.

In certain embodiments, the different operation modes of the scanning light microscope rely on different imaging or localization principles. Examples of imaging principles are brightfield microscopy, darkfield microscopy, phase contrast microscopy, differential interference contrast (DIC) microscopy, fluorescence microcopy, widefield microscopy, confocal scanning microscopy, near field microscopy, far field microscopy, light sheet microscopy, multiphoton microscopy, 4π microscopy, infrared microscopy, STED microscopy, RESOLFT microscopy, PALM/STORM microscopy, MINFLUX microscopy or MINSTED microscopy.

In certain embodiments, the control parameters are optimized with regard to a scanning speed, particularly a line frequency, and/or a scanning field size, particularly a deflection angle, and/or a positional accuracy in the different operation modes, wherein particularly in a first operation mode the control parameters are optimized with regard to a scanning speed, particularly a line frequency, and/or a scanning field size, particularly a deflection angle, and in a second operation mode the control parameters are optimized with regard to a positional accuracy. For example, some control parameters will result in a lower maximum scanning speed, but a higher positional accuracy and vice versa. In addition, there may be sets of control parameters for which scanning accuracy decreases more quickly with increasing scanning speed compared to other parameter sets, since e.g., feedback control works less well with these parameters at certain speeds.

In certain embodiments, the scanner is a galvanometric scanner, particularly a non-resonant galvanometric scanner. Such scanners comprise a galvanometric drive coupled to a mirror which deflects the incoming light beam. Several galvanometer-coupled mirrors may be combined to scan along different axes and/or obtain more degrees of freedom regarding mirror movement and resulting beam deflection. The galvanometric drive consists of a fixed part and a rotatable part comprising a coil and a magnet, wherein the mirror is attached to the rotatable part. The rotatable part is rotated by applying a control voltage resulting in an electric current in the coil and hence in a torque. To ensure positional precision, non-resonant galvanometric scanners are typically feedback controlled using the signal of a positional sensor to correct the control voltage. In particular, the control parameters of the galvanometric scanner determine the feedback control of the galvanometric scanner.

In certain embodiments, the scanner is an electro-optic deflector. Electro-optic deflectors comprise a material which changes its refractive index upon application of an electric field, and thereby deflect an incoming light beam by a variable angle dependent on the applied electric field (electro-optic effect). Electro-optic deflectors are typically controlled by applying a high DC voltage obtained by an amplifier. The control parameters for controlling an electro optic deflector may relate to parameters of such an amplifier. For example, by reducing the maximum amplitude of the amplifier, a higher positional accuracy can be achieved at a constant encoding bit rate.

In certain embodiments, the scanner is an acousto-optic deflector. In acousto-optic deflectors a sound wave is generated in a material through which the light beam passes resulting in diffraction of the light beam. Such sound waves are typically generated by a radio-frequency AC electric signal, which is amplified before being transduced. In a similar manner as described above for electro-optic deflectors, the control parameters may influence this amplification process, e.g., to adjust the positional accuracy at a given encoding bitrate.

In certain embodiments, the scanning light microscopy method further comprises automatically switching between the different operation modes of the scanning light microscope, wherein the control parameters are automatically adjusted dependent on the operation mode in which the scanning light microscope is operated, wherein particularly a sequence of imaging or localization steps in the different operation modes is automatically performed.

In certain embodiments, the scanning light microscopy method comprises manually switching between the different operation modes based on a received user input, wherein particularly the control parameters are automatically adjusted dependent on the selected operation mode. For instance, the switching may be mediated by a user command in a graphical user interface, such as clicking or touching a button or activating a check box, or by a keyboard entry. Sets of control parameters associated with the different operation modes may be stored in a memory comprised in or connected to a control device controlling the scanner.

In certain embodiments, images or localization maps obtained in the different operation modes comprise different resolutions. The term 'resolution', as used herein, is defined as the minimum distance between two point-like objects that can be distinguished by a given microscopic technique. Different resolutions may be achieved, e.g., by switching from low numerical aperture objectives to high numerical aperture objectives, or by different imaging principles such as widefield microscopy and confocal microscopy (resulting in a small increase in lateral resolution and a significant increase in axial resolution), confocal microscopy and STED or RESOLFT microscopy, STED microscopy using different STED laser powers (an increasing power results in an increased resolution), confocal microscopy and MINFLUX or MINSTED microscopy, or STED/RESOLFT microscopy and MINFLUX or MINSTED microscopy.

Operation modes achieving different resolutions advantageously allow to obtain image/localization data from several structural/organizational levels (e.g., cellular level, subcellular/organelle level and molecular level in case of biological cells) of a single sample at relatively low costs and space requirements.

In certain embodiments, one of the at least two different operation modes comprises obtaining a confocal scanning image of the sample.

In certain embodiments, one of the at least two different operation modes comprises obtaining a STED image or a RESOLFT image of the sample and/or obtaining a localization map of the sample by a MINFLUX or MINSTED method.

In certain embodiments, an image or localization map of a first area or volume of the sample is obtained in a first operation mode (comprised in the at least two different operation modes), and an image or localization map of a second area or volume of the sample is obtained in a second operation mode (comprised in the at least two different operation modes), wherein the second area or volume is smaller than the first area or volume.

In certain embodiments, the image of the first area or volume may be an overview image of the sample and the second area or volume may be a region of interest. In particular, the second area or volume may be analyzed in the second operation mode at a higher resolution than the resolution obtained by analyzing the first area or volume using the first operation mode. In this manner, high resolution information may be obtained specifically from regions of interests containing interesting structures. In case the second operation mode is slower than the first operation mode, meaningful information can be obtained while reducing overall acquisition time.

In certain embodiments, the first operation mode may comprise obtaining a confocal scanning image of the sample, and the second operation mode may comprise obtaining a STED/RESOLFT image of the sample, obtaining a localization map of single light-emitting entities in the sample by MINFLUX or MINSTED microscopy or obtaining a trajectory of single light-emitting entities in the sample by MINFLUX tracking.

In certain embodiments, the second area or volume is a partial area of the first area or volume, wherein particularly the method further comprises receiving a user input indicating a selection of the second area or volume based on the image or localization map of the first area or volume, wherein more particularly the image of the first area or volume is an overview image, and the image or localization map of the second area or volume is a detailed image or localization map.

In certain embodiments, a first operation mode (comprised in the at least two operation modes) comprises generating a localization map of single light-emitting entities in the sample, particularly by MINFLUX or MINSTED microscopy, and/or a second operation mode (comprised in the at least two operation modes) comprises tracking single light-emitting entities in the sample over time to obtain a trajectory of the single light-emitting entities, particularly by MINFLUX tracking.

In certain embodiments, at least one of the different operation modes comprises keeping the position of the focused light distribution stationary with respect to the sample.

In this case, the control parameters may be optimized such that positional jitter of the scanner is minimized. For example, a galvanometric scanner can be used for coarse positioning of the excitation light beam in MINFLUX or MINSTED microscopy, whereas a separate scanning device (e.g., comprising one or more electro-optic deflectors) is used for illuminating the sample in a pattern around the current position estimate of a single light-emitting entity. During pattern scanning of the EODs, beam position jitter by the galvanometric scanner should be minimal to avoid adding noise to the position estimation. Compared to providing separate light paths for coarse and fine scanning, the above-described embodiment advantageously results in decreased switching times, less bulky instrumentation, and reduced complexity.

In certain embodiments, controlling the scanner comprises determining actual positions of the scanner, and adjusting the actual positions, particularly by closed loop control, based on the determined actual positions. E.g., for a galvo scanner, the actual position may be a rotational position of a galvo shaft holding a scan mirror. For example, the actual positions may be determined by a positional sensor, e.g., comprising LEDs and photodiodes.

In certain embodiments, the control parameters comprise parameters of said closed loop control.

In certain embodiments, a position error is generated from a position set point and the determined actual position, and the position of the scanner is adjusted/corrected based on the position error, particularly proportionally to the position error. This type of control is also termed 'proportional' (P type) or 'error proportional' control, and is applied, e.g., in PI, PD and certain PID controllers. The amount of proportional control contributing to the resulting control signal is also termed 'proportional gain'.

In certain embodiments, controlling the scanner comprises determining an integral of the actual positions or the position errors over a certain time interval, wherein the position of the scanner is adjusted based on the determined integral. In particular, one or several integrators may be used in the closed loop control. This type of control is applied, e.g., in PI and certain PID controllers, and the amount of integral control contributing to the resulting control signal is termed 'integral gain'.

In certain embodiments, controlling the scanner comprises determining a derivative of the actual position, wherein the position of the scanner is adjusted based on the determined derivative. Such derivatives represent the velocity of the scanner and may be derived in different ways, e.g., by differentiating the position signal, or by integrating the drive current through the coil of a galvanometric drive, which determines the scanner velocity. These derivative signals behave as damping terms, in particular having frequency behaviors depending on how the derivative signal is generated (e.g., low frequency for differentiated position signals, and high frequency for integrated drive current). This type of control is known as 'derivative' (D type) control and is included in PD and PID controllers. The amount of derivative control contributing to the resulting control signal is termed 'derivative gain' or damping.

In certain embodiments, controlling the scanner comprises adjusting the position of the scanner based on the determined actual position, particularly proportional to the actual position (position-proportional gain).

The different control terms may be combined to control the scanner position.

For instance, error proportional control may be combined with derivative control (low frequency damping, high frequency damping or both) without integral control to realize a PD controller. These settings result in especially high scanning speeds, but lower positional accuracy. Hence, control parameters including PD control are suitable, in particular, for operation modes requiring high speed scanning, e.g., coarse overview confocal scanning.

Furthermore, error-proportional gain and derivative gain (low and/or high frequency damping) may be combined with integral gain and position-proportional gain to realize a certain type of PID controller, in particular at relatively low integral gains and position-proportional gains compared to the error-proportional gain and derivative gain. This results in high positional accuracy, but low speed, which is advantageous for applications, in which the scan mirror is kept stationary for longer periods of time, e.g., during pattern scanning using electro-optic deflectors in MINFLUX microscopy.

A further type of control, termed 'pseudo derivative feedback' (PDF) applies a combination of integral gain and position-proportional gain without error proportional gain, optionally combined with high frequency and/or low frequency damping (derivative control). This achieves very high accuracy at lower scanning speeds, and can be applied, e.g., for high accuracy scanning of smaller fields of view (for instance during STED imaging of smaller ROIs).

Furthermore, so called 'pseudo derivative feedback with feed forward' (PDFF), a combination of integral gain, position-proportional gain and additional error proportional gain, optionally combined with high frequency and/or low frequency damping, results in very high accuracy and relatively high scanning speeds. This combination may be used, e.g., in high-accuracy applications.

In certain embodiments, the scanner is controlled based on a nominal scanning curve comprising a plurality of time values and a plurality of position set points, wherein each time value corresponds to a respective position set point, and wherein the scanner is controlled based on different nominal scanning curves in the different operation modes. Examples of nominal scanning curves may be approximated by harmonic functions (e.g., sine and cosine), sawtooth functions and the like.

In certain embodiments, the control parameters comprise parameters of a slew rate limiter. A slew rate limiter adjusts the nominal scanning curve if the nominal scanning curve results in velocities which cannot be realized by the scanner (e.g., since the power amplifier of the scanner controller is saturated). In particular, this may happen, if large jumps in short periods of time are specified by the nominal scanning curve. In such a case, the slew rate limiter converts such jumps into ramps, thereby smoothing the nominal scanning curve. Parameters of the slew rate limiter may influence scanning accuracy and scanning speed.

In certain embodiments, the control parameters influence an encoded scan range measured in scanning angle per bit. The input voltage is typically digitally encoded, and the input voltage can be associated with a certain range of scan angles. Thus, both the total number of bits and the total range of scan angles, e.g., 40° or 90° that is reachable by the scanner, determines the scanning accuracy. If a smaller total scan range is chosen, as is acceptable during scanning of small fields of view, this results in a higher positional accuracy.

In certain embodiments, the control parameters influence a bandwidth of scanning. A high bandwidth results in high scanning speed but increased positional noise.

In certain embodiments, the control parameters influence a tracking delay, i.e., a temporal delay of the actual scanner position relative to the corresponding control signal. A short tracking delay is especially important in tracking applications but may increase positional noise.

A second aspect of the disclosure relates to a scanning light microscope, particularly configured to execute the method according to the first aspect, wherein the scanning light microscope is operable in at least two different operation modes. The scanning light microscope comprises at least one light source configured to illuminate a sample with illumination light (particularly excitation light), a scanner configured to scan a focused light distribution of the illumination light over or through the sample, wherein the scanner comprises adjustable control parameters, and a detector configured to detect light emitted by light-emitting entities in the sample in response to the illumination light to obtain an image of the sample or a localization map of single light-emitting entities in the sample. The scanning light microscope further comprises a control device configured to adjust the control parameters of the scanner dependent on the operation mode, in which the scanning light microscope is operated.

In certain embodiments, the scanner is a galvanometric scanner, an electro-optic deflector or an acousto-optic deflector.

In certain embodiments, the detector is a point detector (e.g., an APD, a photomultiplier or a hybrid detector) or an array detector.

In certain embodiments, the light source is a laser source, particularly a pulsed laser source.

In certain embodiments, the scanning light microscope, particularly the control device, comprises a memory configured to store the control parameters.

In certain embodiments, the scanning light microscope comprises an adjusting device configured to access the memory to adjust the stored control parameters.

In certain embodiments, the control device is configured to retrieve sets of stored control parameters from the memory dependent on the operation mode in which the scanning light microscope is operated.

In certain embodiments, the scanning light microscope comprises a first light source, particularly a first laser source, configured to generate excitation light to excite light-emitting entities in the sample.

In certain embodiments, the scanning light microscope comprises a second light source, particularly a second laser source, configured to generate depletion light (particularly STED light) configured to deplete an excited state of the light-emitting entities in the sample or configured to generate switching light configured to mediate switching between different states of the light-emitting entities.

In certain embodiments, the scanning light microscope comprises a light modulator (particularly a spatial light modulator or a phase filter) configured to modulate the phase of the illumination light beam to generate a light distribution (e.g., a donut-shaped light distribution or a bottle-beam-shaped light distribution) comprising at least one local intensity minimum at the focus. In particular, the spatial light modulator may be configured to modulate the phase of the depletion or switching light to generate a depletion or switching light distribution having at least one local minimum at the focus (e.g., for STED or RESOLFT microscopy), or the spatial light modulator may be configured to modulate the phase of the excitation light to generate an excitation light distribution comprising a local intensity minimum at the focus (e.g., for MINFLUX microscopy).

In certain embodiments, the scanning light microscope comprises a deflection device (different from the scanner) configured to scan the illumination light over or through the sample, wherein particularly the deflection device comprises at least one electro-optic deflector or at least one acousto-optic deflector, in addition to the scanner, wherein particularly the scanner is a galvanometric scanner.

In certain embodiments, the scanning light microscope comprises a deformable mirror configured to adjust an axial position of the focus of the illumination light. Therein, the term 'axial position' describes a position parallel to an imaginary axis, along which the sample is illuminated by the illumination light.

A third aspect of the disclosure relates to a computer program configured to cause the scanning light microscope according to the second aspect to execute the method according to the first aspect, when the computer program is executed on a computer.

Further favorable embodiments of the scanning light microscope according to the second aspect and the computer program according to the third aspect have already been mentioned in the context of the scanning light microscopy method according to the first aspect.

Further embodiments of the invention may be derived from the claims, the description and the drawings. Therein, the claims are not to be construed in a manner such that only subjects, devices or methods respectively comprising all or none of the features of a sub claim in addition to the features of the independent claims 1, 14 and 15, may be possible embodiments of the invention. In contrast, further embodiments may be drawn from features stated in the description or derivable from the drawings which may be singly or cumulatively applied.

The invention is further elucidated and described hereafter with reference to the exemplary embodiments displayed in the figures. These embodiments are non-restrictive examples which are not meant to limit the scope of the invention.

### Short description of the figures

- Fig. 1: shows a first embodiment of a scanning light microscope according to the invention;
- Fig. 2: shows a second embodiment of a scanning light microscope according to the invention;
- Fig. 3: shows scanning patterns used in different operational modes of the scanning light microscope according to an embodiment of the scanning light microscopy method;
- Fig. 4: shows further scanning patterns used in different operational modes of the scanning light microscope according to a further embodiment of the scanning light microscopy method;
- Fig. 5: shows examples of a graphical user interface for adjusting control parameters according to an embodiment of the invention.

### Description of the figures

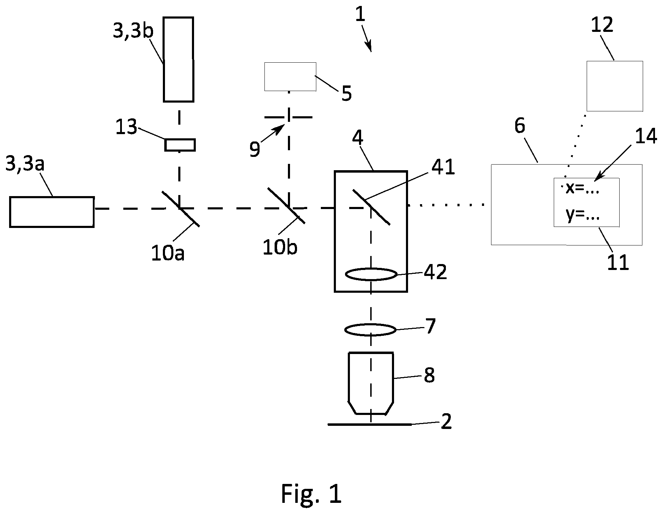

Fig. 1 shows a scanning light microscope 1 according to the invention having a first operational mode for confocal scanning microscopy and a second operational mode for STED or RESOLFT microscopy.

The scanning light microscope 1 comprises a first light source 3a, particularly an excitation laser source, for generating an excitation light beam and a second light source 3b, particularly a depletion or switching laser source, for generating a depletion or switching light beam, joined into a common beam path by a first dichroic mirror 10a.

In the first operation mode (confocal scanning microscopy), the second light source 3b is either switched off or the depletion or switching light beam is attenuated (e.g., by an acousto-optic modulator, AOM, not shown in Fig. 1). The excitation light beam passes through a scanner 4 and a tube lens 7 and is focused into the sample 2 by the objective lens of the objective 8, forming a regular focus.

The focus is scanned over the sample 2 by the scanner 4. In Fig. 1, the scanner 4 is schematically depicted as a galvanometric scanner comprising a rotatable scan mirror 41 mounted on a galvanometric drive, and a scan lens 42. Of course, the scanner 4 may comprise additional scan mirrors 42 (not shown) to realize scanning along two axes in the focal plane as known from the prior art.

In the sample 2, light-emitting entities (e.g., fluorophores) are excited by the excitation light beam and emit light upon decay to the ground state. The emitted light travels back through the objective 8, is de-scanned by the scanner 4 and coupled into a detection beam path by means of a second dichroic mirror 10b. In the detection beam path, the emitted light further passes through a confocal pinhole 9 and reaches a detector 5, e.g., a point detector, such as an APD, a photomultiplier or a hybrid detector. Alternatively, the detector 5 may be an array detector.

The scanner 4 is controlled by a control device 6 using a first set of control parameters 14 stored in a memory 11. In particular, the scanner 4 further comprises a positional sensor which determines a current rotational position of the scan mirror 41 (and optionally further scan mirrors), e.g., comprising an LED and a photodiode. The positional sensor generates a position signal which is transmitted to the control device 6. Using a regulatory loop (closed loop control) applying the control parameters 14, the control device 6 determines a corrective voltage, which is then applied to the galvanometric drive to correct its rotational position.

In the second operation mode (adapted for STED or RESOLFT microscopy), the second light source 3b is switched on or de-attenuated. The depletion or switching light beam generated by the second light source 3b is phase modulated by a light modulator 13 positioned at a suitable position in the beam path, particularly at or near a plane which is conjugated to the pupil plane of the objective 8. The light modulator 13 may display, e.g., a vortex-shaped or top hat-shaped phase pattern, resulting in a donut-shaped or bottle-beam-shaped depletion or switching light distribution at the focus, which is superimposed with the regular focus of the excitation light to obtain a resolution below the diffraction limit. The light modulator 13 may be. e.g., a phase plate or a spatial light modulator comprising pixels with adjustable retardance, as known from the prior art.

Upon switching from the first operation mode to the second operation mode, an adjusting device 12 triggers adjustment of the control parameters 14 in the memory 11 or triggers loading of a different second set of the control parameters 14 from the memory 11 into the control device 6. This may be initiated automatically or as a result of a user input, e.g., activating a button on a graphical user interface displayed on a display device (not shown).

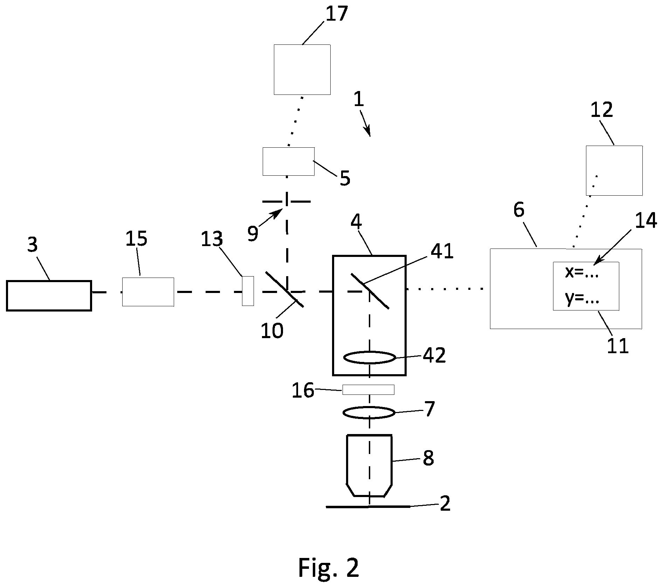

For example, the control parameters 14 used in the second operation mode may be better suited for slower and more accurate scanning, as is beneficial for high resolution STED or RESOLFT images in contrast to coarse overview scanning by confocal microscopy (first operation mode). **Fig.** 2 illustrates a further embodiment of a scanning light microscope 1 according to the invention having a first operational mode for confocal scanning microscopy and a second operational mode for MINFLUX microscopy. Components which are also included in the scanning light microscope 1 shown in Fig. 1 and have been described above are labeled with identical reference numerals. In contrast to the embodiment shown in Fig. 1, the scanning light microscope 1 comprises only a single light source 3, particularly an excitation laser for generating an excitation light beam. In the beam path of the excitation light, a light modulator 13 for phase modulation of the excitation light beam is arranged. In particular, the light modulator 13 is a spatial light modulator comprising an array of pixels with adjustable retardance values. In the first operation mode, the spatial light modulator may display uniform retardance values, such that the excitation light beam is not phase modulated and forms a regular focus which is scanned over the sample 2 by the galvanometric scanner 4. As explained for the embodiment shown in Fig. 1, the emission light is de-scanned by the scanner 4, separated from the excitation light by the dichroic mirror 10 and passes via the confocal pinhole 9 to the point detector 5.

In the second operation mode, the excitation light is phase modulated by the light modulator 13 (which, e.g., displays a vortex-shaped or top hat-shaped retardance pattern) to form an excitation light distribution with a local minimum (e.g., a donut-shaped or bottle-beam-shaped light distribution) at the focus.

The hollow excitation focus is scanned over the sample 2 in a pattern in the vicinity of an estimated position of a single light-emitting entity by an additional deflection device 15 (e.g., comprising two electro-optic deflectors arranged in tandem for biaxial scanning) in the second operation mode (MINFLUX), while the scan mirror 41 of the galvanometric scanner 4 remains stationary. In this situation, to avoid introduction of noise, the control parameters 14 of the galvanometric scanner 4 are adjusted to minimize positional jitter of the scan mirror 41.

To shift the scanning positions in an axial direction, particularly in the second operation mode (MINFLUX), the focus of the excitation light may be shifted by an optional deformable mirror 16. In this manner, 3D positional information from single light-emitting entities in the sample 2 may be obtained.

For each scanning position, the detector 5 measures a photon count or light intensity of the emitted light. This signal depends on the position of the excitation light distribution relative to the actual position of a single light-emitting entity in the sample 2. This signal decreases as the distance between the central minimum and the actual position of the light-emitting entity becomes smaller. A processing device 17 of the scanning light microscope 1 determines a new position estimate from the measured photon counts/light intensities and the associated scanning positions.

According to both described embodiments (Fig. 1 and Fig. 2), the control parameters 14 in the first operation mode (confocal imaging) may be adjusted to facilitate high scanning speed over a relatively large field of view at the expense of lower positional accuracy. Thereby, an overview image of the sample 2 may be obtained to select regions of interest for high resolution imaging/localization as elucidated further below.

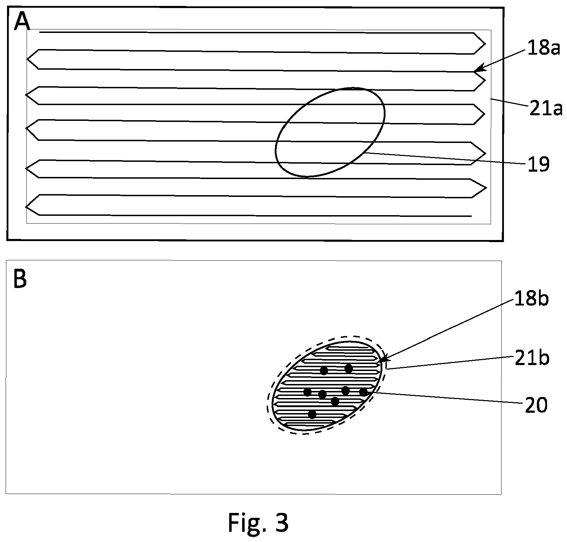

**Fig.** 3 schematically shows a part of the sample 2 which is analyzed by scanning patterns 18a, 18b in different operation modes of the scanning light microscope 1 shown in Fig. 1 and described above. Fig. 3A depicts a first scanning pattern 18a representing a coarse overview scan obtained in the first operation mode (confocal laser scanning microscopy) over a first area 21a of the sample 2. In the overview scan, a region of interest containing a cell 19 is detected. Subsequently, as illustrated in Fig. 3B, a second area 21b containing the cell 19, which is a partial area of the first area 21a, is scanned in a finer second scanning pattern 18b using STED or RESOLFT microscopy in the second operation mode. The resulting STED or RESOLFT image shows structures 20 in the cell 19 which were not detectable in the confocal overview scan.

Different sets of control parameters 14 are used to control the galvanometric scanner 4 in the first operation mode (Fig. 3A) and the second operation mode (Fig. 3B). In particular, the control parameters 14 used in the overview scan (Fig. 3A) are optimized with regard to scanning speed but result in a lower accuracy. In contrast, the control parameters 14 used in the STED/RESOLFT scan (Fig. 3B) are optimized with regard to positional accuracy, but result in a slower acquisition, which is acceptable in this case, since only a relatively small field of view is scanned using the information obtained in the coarse overview scan.

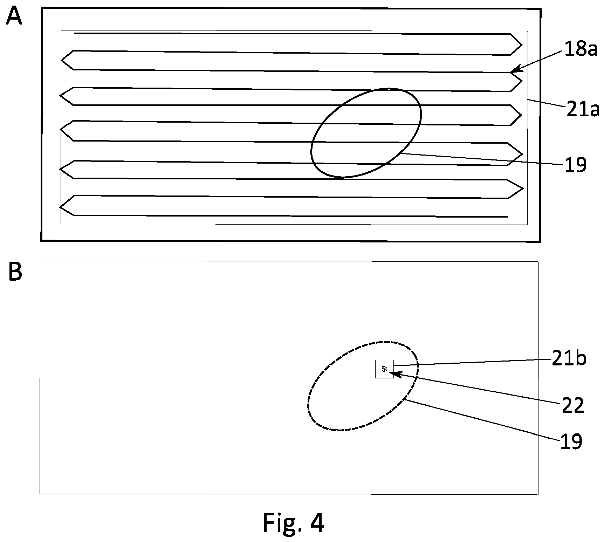

**Fig. 4** illustrates the same part of the sample 2 analyzed by the scanning light microscope 1 shown in Fig. 2 using confocal laser scanning microscopy as the first operation mode (Fig. 4A) and MINFLUX microscopy as the second operation mode (Fig. 4B). Fig. 4A shows a coarse overview scan over a first area 21a obtained in the first operation mode as described above for Fig. 3A, in which a cell 19 is detected. Subsequently, a second area 21b within the boundaries of the cell 19 is analyzed in the second operation mode (Fig. 4B). Thereby, a localization map 22 of single light-emitting entities (particularly fluorophores) is obtained by MINFLUX microscopy.

The scanning pattern used for MINFLUX microscopy is not depicted in Fig. 4B for simplicity. A possible scanning pattern is a hexagon centered at a current position estimate of a single light-emitting entity. In particular, scanning is performed iteratively, i.e., after obtaining a new position estimate of the light-emitting entity, another scan is performed using a smaller hexagon pattern centered at the new position estimate. This process can be continued until the position estimate converges or until the light-emitting entity ceases to emit light (e.g., by photobleaching in case of fluorophores). After obtaining a position estimate of one light-emitting entity, this process may be continued with further single light-emitting entities to construct the localization map 22.

The confocal scan (Fig. 4A) may be performed by the scanner 4 (a galvanometric scanner according to this example), and an additional deflection device 15 (e.g., comprising electro-optic deflectors) may be used for the MINFLUX scan (Fig. 4B), while the scan mirror 41 of the scanner 4 is kept stationary. In this case, the control parameters 14 will be adapted to provide high speed and low accuracy in the first operation mode and low positional jitter in the second operation mode.

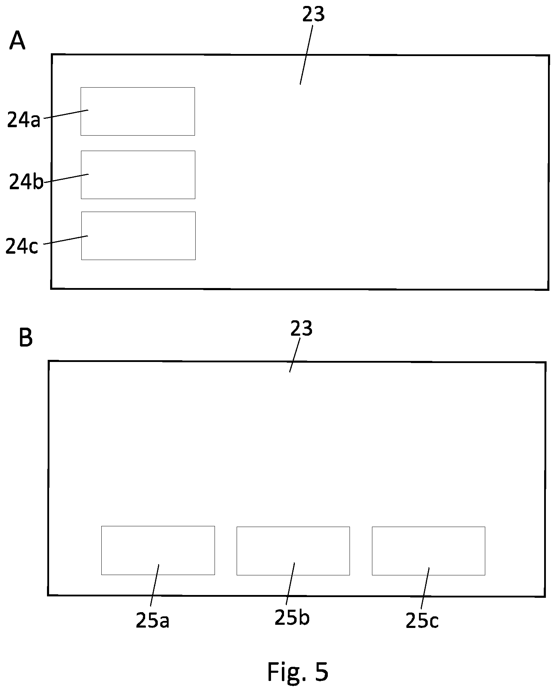

**Fig. 5** shows examples of a graphical user interface 23 (GUI) for adjusting the control parameters 14 of the scanner 4.

According to a first example shown in Fig. 5A, three mode buttons 24a, 24b, 24c are provided on the GUI 23. By activating the buttons (e.g., by a mouse click or by touching the buttons on a touch screen), a user may select an operation mode of the scanning light microscope 1, such as, e.g., 'confocal laser scanning image', 'STED image' and 'MINFLUX localization'. In particular, activating one of these buttons automatically selects suitable sets of control parameters 14 for the scanner 4 and automatically initiates data acquisition in the respective operation mode.

According to a second example depicted in Fig. 5B, the GUI 23 contains three parameter buttons 25a, 25b, 25c associated with different sets of control parameters 14 for the scanner 4. For example, the buttons may be labeled 'fast scan', 'accurate scan' and 'galvo jitter reduction'. By activating a button, a corresponding set of control parameters 14 is loaded in the control device 6, such that data acquisition started thereafter is performed using the selected set of control parameters 14, e.g., parameters implementing PD control for a fast scan, parameters implementing PDF or PDFF control for an accurate scan and parameters implementing PID control for galvo jitter reduction.

### List of reference signs

- 1: Scanning light microscope
- 2: Sample
- 3: Light source
- 3a: First light source
- 3b: Second light source
- 4: Scanner
- 5: Detector
- 6: Control device
- 7: Tube lens
- 8: Objective
- 9: Pinhole
- 10: Dichroic mirror
- 11: Memory
- 12: Adjusting device
- 13: Light modulator
- 14: Control parameters
- 15: Deflection device
- 16: Deformable mirror
- 17: Processing device
- 18a: First scanning pattern
- 18b: Second scanning pattern
- 19: Cell
- 20: Structure
- 21a: First area
- 21b: Second area
- 22: Localization map
- 23: Graphical user interface
- 24a,24b,24c: Mode button
- 25a,25b,25c: Parameter button
- 41: Scan mirror
- 42: Scan lens

## Claims

1. A scanning light microscopy method comprising
- illuminating a sample (2) with illumination light,
- scanning a focused light distribution of the illumination light over or through the sample (2) by means of a scanner (4) comprising adjustable control parameters (14), and
- detecting light emitted by light-emitting entities in the sample (2) in response to the illumination light to obtain an image of the sample (2) or to obtain a localization map (22) of single light-emitting entities in the sample (2),
- wherein the method is performed by a scanning light microscope (1) which is operable in at least two different operation modes,
**characterized by**
adjusting the control parameters (14) of the scanner (4) dependent on the operation mode, in which the scanning light microscope (1) is operated.

2. The method according to claim 1, **characterized in that** in the different operation modes, different components of the light microscope (1) are used or the components of the light microscope (1) interact or are arranged with respect to each other in a different manner.

3. The method according to claim 1 or 2, **characterized in that** the different operation modes of the light microscope (1) rely on different imaging or localization principles.

4. The method according to one of the preceding claims, **characterized in that** the control parameters (14) are optimized with regard to a scanning speed and/or a scanning field size and/or a positional accuracy in the different operation modes, wherein particularly in a first operation mode the control parameters (14) are optimized with regard to a scanning speed and/or a scanning field size, and in a second operation mode the control parameters (14) are optimized with regard to a positional accuracy.

5. The method according to one of the preceding claims, **characterized in that** the scanner (4) is a galvanometric scanner, an electro-optic deflector or an acousto-optic deflector.

6. The method according to one of the claims 1 to 5, **characterized in that** the method further comprises
- automatically switching between the different operation modes of the scanning light microscope (1), wherein the control parameters (14) are automatically adjusted dependent on the operation mode, in which the scanning light microscope (1) is operated, wherein particularly a sequence of imaging or localization steps in the different operation modes is automatically performed, or
- manually switching between the different operation modes based on a received user input, wherein particularly the control parameters (14) are automatically adjusted dependent on the selected operation mode.

7. The method according to one of the preceding claims, **characterized in that** images or localization maps (22) obtained in the different operation modes comprise different resolutions.

8. The method according to one of the preceding claims, **characterized in that** one of the operation modes comprises obtaining a confocal scanning image of the sample (2), obtaining a STED image or a RESOLFT image of the sample (2) and/or obtaining a localization map (22) of the sample (2) by a MINFLUX or MINSTED method.

9. The method according to one of the preceding claims, **characterized in that** an image or localization map (22) of a first area (21a) or volume of the sample (2) is obtained in a first operation mode, and an image or localization map (22) of a second area (21b) or volume of the sample (2) is obtained in a second operation mode different from the first operation mode, wherein the second area (21b) or volume is smaller than the first area (21a) or volume, wherein particularly the second area (21b) or volume is a partial area of the first area (21a) or volume, wherein particularly the method further comprises receiving a user input indicating a selection of the second area (21b) or volume based on the image or localization map (22) of the first area (21a) or volume, wherein more particularly the image of the first area (21a) or volume is an overview image, and the image or localization map (22) of the second area (21b) or volume is a detailed image or localization map (22).

10. The method according to one of the preceding claims, **characterized in that** a first operation mode comprises generating a localization map (22) of single light-emitting entities in the sample (2) and a second operation mode comprises tracking single light-emitting entities in the sample (2) over time to obtain a trajectory of the single light-emitting entities.

11. The method according to one of the preceding claims, **characterized in that** one of the operation modes comprises keeping the position of the focused light distribution stationary with respect to the sample (2).

12. The method according to one of the preceding claims, **characterized in that** controlling the scanner (4) comprises determining actual positions of the scanner (4) and adjusting the position of the scanner (4) based on the determined actual positions, wherein particularly the position of the scanner (4) is adjusted by closed loop control, wherein the control parameters (14) comprise parameters of said closed loop control.

13. The method according to one of the preceding claims, **characterized in that** the scanner (4) is controlled based on a nominal scanning curve comprising a plurality of time values and a plurality of position set points, wherein each time value corresponds to a respective position set point, and wherein the scanner (4) is controlled based on different nominal scanning curves in the different operation modes.

14. A scanning light microscope (1), particularly configured to execute the method according to one of the claims 1 to 13, wherein the scanning light microscope (1) is operable in at least two different operation modes, comprising
- a light source (3) configured to illuminate a sample (2) with illumination light,
- a scanner (4) configured to scan a focused light distribution of the illumination light over or through the sample (2), wherein the scanner (4) comprises adjustable control parameters (14),
- a detector (5) configured to detect light emitted by light-emitting entities in response to the illumination light to obtain an image of the sample (2) or a localization map (22) of single light-emitting entities in the sample (2),
**characterized in that**
the scanning light microscope (1) comprises a control device (6) configured to adjust the control parameters (14) of the scanner (4) dependent on the operation mode, in which the scanning light microscope (1) is operated.

15. A computer program configured to cause the scanning light microscope (1) according to claim 14 to execute the method according to one of the claims 1 to 13, when the computer program is executed on a computer.
